# EUROPEAN PATENT APPLICATION

(11) **EP 4 779 762 A2**
(43) Date of publication of application: **22.07.2026**
(21) Application number: 26181219.2
(22) Date of filing: 20.07.2023
(51) Int. Cl.: H01M 10/658

(54) **SECONDARY BATTERY WITH ENHANCED SAFETY**

(30) Priority: 26.07.2022 KR 20220092176
(62) Divisional of application: 23846914.2
(71) Applicant: LG Energy Solution, Ltd., Seoul 07335 (KR)
(72) Inventor: KO, Young Jun, 34122 Daejeon (KR); SUNG, Joo Hwan, 34122 Daejeon (KR); JUNG, Kyung Hwan, 34122 Daejeon (KR)
(74) Representative: Goddar, Heinz J.

(57) **Abstract**

Disclosed herein relates to a secondary battery, which, in one example, includes a venting device that opens when a pressure inside a case exceeds a first predetermined value, wherein the venting device includes a rupture disk formed with a bursting part that bursts at the first predetermined value, and is provided with a heat-absorbing porous member on at least one of an upstream and downstream side of the rupture disk.

## Description

### TECHNICAL FIELD

The present invention relates to a secondary battery, and more particularly to a secondary battery capable of delaying or suppressing the structural collapse of a secondary battery even when thermal runaway occurs in the secondary battery.

This application claims the benefit of priority based on Korean Patent Applications No. 10-2022-0092176, filed on July 26, 2022, the disclosure of which is incorporated herein by reference in its entirety.

### BACKGROUND TECHNOLOGY OF THE INVENTION

Unlike primary batteries, secondary batteries can be recharged, and they have been heavily researched and developed in recent years due to their potential for miniaturization and large capacity. The demand for secondary batteries as an energy source is increasing rapidly due to the technological development and increasing demand for mobile devices, and for electric vehicles and energy storage systems, which are emerging in response to the need for environmental protection.

Secondary batteries are categorized into coin-type cells, cylindrical cells, prismatic cells, and pouch-type cells based on the shape of the cell case. In a secondary battery, an electrode assembly mounted inside the battery case is a charge and dischargeable power generator consisting of a laminated structure of electrodes and separators.

Since secondary batteries are required to be used continuously for a long period of time, it is necessary to effectively control the heat generated during the charging and discharging process. If the secondary battery is not properly cooled, the increase in temperature will cause an increase in current, and the increase in current will cause another increase in temperature, resulting in a feedback chain reaction that will eventually lead to the catastrophic condition of thermal runaway.

When thermal runaway occurs in a secondary battery, the temperature and pressure rise together, and if the temperature and pressure rise to a level that exceeds the thermal and pressure resistance of the secondary battery, the structure of the secondary battery will eventually collapse. When the structure of the secondary battery collapses, a large amount of air is supplied to the interior, causing a fire or explosion to grow uncontrollably and spread to the surrounding area, causing great damage.

To prevent this structural collapse, secondary batteries, especially cylindrical or prismatic batteries, are often equipped with a venting device. A venting device is a kind of safety valve that releases the pressure inside the secondary battery by rupturing when the pressure exceeds a certain level.

However, current venting devices do not have the ability to prevent flame propagation even if they relieve the pressure by venting the gas. For example, flames with strong gases can be released through a venting device, which can lead to an external fire.

### [Prior Art Document]

(Patent Document 001) Korean Patent Publication No. 2017-0014309 (published on February 8, 2017)

### DESCRIPTION OF THE INVENTION

### TECHNICAL PROBLEM

The present invention aims to improve the safety of secondary batteries by enabling a venting device to release gases to relieve pressure inside the secondary battery, while also preventing the release of flames.

However, the technical problems that the present invention seeks to address are not limited to those described above, and other problems not mentioned will be apparent to those of ordinary skill in the art from the following description of the invention.

### TECHNICAL SOLUTION

The present invention relates to a secondary battery, which in one example includes a venting device that opens when the pressure inside the case exceeds a first predetermined value, wherein the venting device includes a rupture disk having a bursting part formed therein that bursts at the first predetermined value, and is provided with a heat-absorbing porous member on at least one of the upstream and downstream sides of the rupture disk.

In an exemplary embodiment of the present invention, the heat-absorbing porous member is located outside the bursting range of the bursting part.

The heat-absorbing porous member may be a member in which a corrugated metal ribbon is wound annularly to form a plurality of layers, or may be a member made up of a metal mesh net.

In addition, the heat-absorbing porous member is located downstream of the rupture disk, and may be displaced out of the venting device when a pressure of a second predetermined value exceeding the first predetermined value is applied for a predetermined period of time.

For example, the heat-absorbing porous member may be displaced from the venting device when an internal pressure of 3 atmospheres or more is maintained for more than 1 second.

According to an exemplary embodiment, the downstream side of the heat-absorbing porous member is provided with a breakage projection formed on the inner surface of the venting device, wherein the breakage projection may break when a pressure of the second predetermined value is applied for a predetermined period of time.

Here, the heat-absorbing porous member may be made of a heat-resistant stainless steel.

According to another exemplary embodiment of the present invention, the heat-absorbing porous member is located downstream of the rupture disk, and may melt and be removed from the venting device when the temperature of the venting gas rises above the boundary temperature and is applied for a predetermined period of time.

For example, the heat-absorbing porous member may melt and be removed from the venting device when the temperature of the venting gas rises above 500°C and is applied for more than 5 seconds.

Here, the heat-absorbing porous member may be made of aluminum or aluminum alloy material.

The aluminum material may include at least one of 1060, 1100 aluminum.

In addition, the aluminum alloy material may include at least one of 2011, 2014, 2017, 2024, 3003, 4032, 5052, 5056, 5083, 6061, 6N01, 6063, 7003, 7075, and 7N01 aluminum alloys.

### ADVANTAGEOUS EFFECTS

The secondary battery of the present invention with the above configuration prevents a structural collapse of a secondary battery by opening a rupture disk of a venting device to discharge gas when the pressure inside the case rises excessively to exceed a first predetermined value, and a heat-absorbing porous member prevents the risk of fire by taking away the heat of high-temperature gas or flame and lowering it to a temperature below the ignition point, thereby exerting a double safety function.

In addition, the secondary battery of the present invention can prevent the rapid spread of flames due to the structural collapse of the secondary battery by configuring the heat-absorbing porous member to deviate from the venting device in a dangerous situation where the internal pressure rises excessively due to the accumulation of a large number of particles in the heat-absorbing porous member and the gas discharge is impeded, thereby further improving the safety of the secondary battery.

However, advantageous effects of the present technology are not limited to those mentioned above, and other effects not mentioned will be apparent to one of ordinary skill in the art from the following description of the invention.

### BRIEF DESCRIPTION OF THE DRAWINGS

The following drawings accompanying this specification illustrate preferred exemplary embodiments of the present invention and are intended to serve as a further understanding of the technical ideas of the present invention in conjunction with the detailed description of the invention that follows, so the present invention is not to be construed as limited to what is shown in such drawings.
FIG. 1 is a drawing of a secondary battery according to the present invention.
FIG. 2 is a cross-sectional view of a venting device for a secondary battery according to an exemplary embodiment of the present invention.
FIGS. 3 and 4 illustrate an example of a heat-absorbing porous member, respectively.
FIG. 5 is a drawing illustrating the operation of the venting device of FIG. 2.
FIG. 6 is a drawing illustrating another exemplary embodiment of the venting device of FIG. 2.
FIG. 7 is a drawing illustrating an exemplary embodiment of a heat-absorbing porous member being displaced from a venting device when excess pressure is applied.
FIG. 8 is a drawing illustrating an exemplary embodiment in which a heat-absorbing porous member is removed from a venting device when an excessive temperature is applied.

### PREFERRED IMPLEMENTATION EXAMPLES

The present invention may have various modifications and various examples, and specific examples are illustrated in the drawings and described in detail in the description.

However, it should be understood that the present invention is not limited to specific embodiments, and includes all modifications, equivalents or alternatives within the spirit and technical scope of the present invention.

The terms "comprise," "include" and "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

The present invention relates to a secondary battery, which in one example includes a venting device that opens when a pressure inside the case exceeds a first predetermined value, the venting device including a rupture disk formed with a bursting part that bursts at the first predetermined value, and having a heat-absorbing porous member on at least one of an upstream and downstream side of the rupture disk.

As such, the secondary battery of the present invention is provided with a venting device, and the venting device is provided with a heat-absorbing porous member. Accordingly, the rupture disk of the venting device is opened when the pressure inside the case rises excessively to exceed the first predetermined value, thereby preventing the structural collapse of the secondary battery by discharging gas, and the heat-absorbing porous member prevents the risk of fire by taking away the heat of high-temperature gas or flame and lowering it to a temperature below the ignition point.

### IMPLEMENTATION EXAMPLES

Hereinafter, a detailed description will be given of specific embodiments of the secondary battery of the present invention with reference to the attached drawings. For reference, the relative positions specified in the directions of front and back, up and down, and left and right used in the following description are intended to aid in understanding the invention, and unless specially defined, are based on the directions shown in the drawings.

### [First Implementation Example]

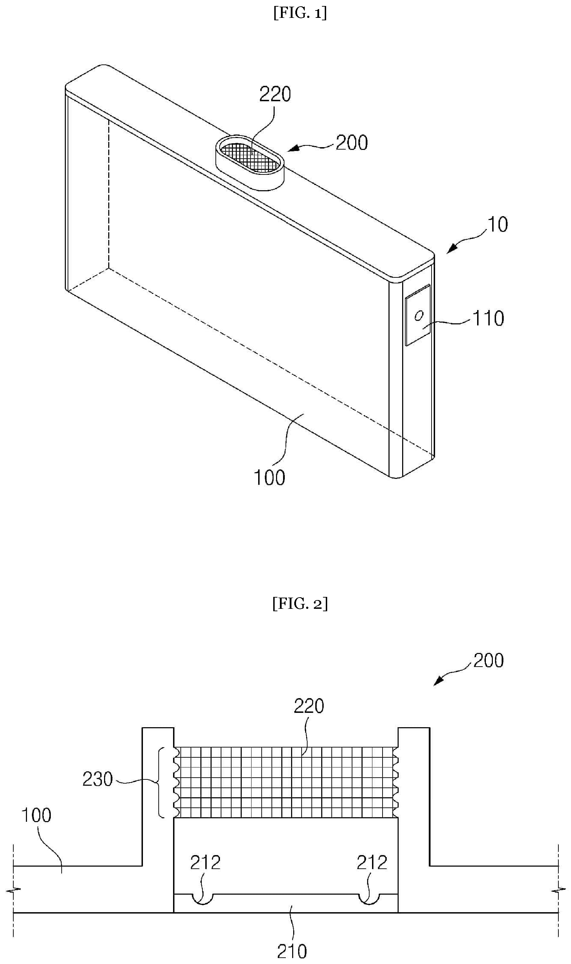

FIG. 1 is a drawing of a secondary battery 10 according to the present invention. Exemplarily shown in FIG. 1 is a bidirectional secondary battery 10 in which the electrode terminal 110 of the positive electrode and the negative electrode are separately disposed on two sides of the case 100, and the venting device 200 is located on the top surface of the case 100. The bidirectional secondary battery 10 of FIG. 1 is an example, and the main configuration of the present invention can be applied to various secondary batteries, including unidirectional secondary batteries.

The secondary battery 10 of the present invention includes a venting device 200, which opens when the pressure inside the secondary battery 10 exceeds a certain level, i.e., when the pressure inside the case 100 exceeds a first predetermined value, as a safety measure to release the pressure built up inside. FIG. 2 is a cross-sectional view of the venting device 200 of the secondary battery 10 according to a first embodiment of the present invention, wherein the venting device 200 includes a rupture disk 210.

The rupture disk 210 is a thin plate-like member having a notched bursting part 212 formed on its surface. The rupture disk 210 seals the secondary battery 10, and when the internal pressure of the case 100 increases, the pressure causes tensile strain across the thin rupture disk 210, and the weaker bursting part 212 is teared to release the internal pressure of the case 100.

The venting device 200 is useful for relieving excessive internal pressure affecting the structural safety of the secondary battery 10 by venting gases, but if a flame occurs inside the secondary battery 10, the flame may erupt along with strong gases, creating a risk of an external fire. To prevent flame eruption through the venting device 200, the present invention provides a heat-absorbing porous member 220 on at least one of the upstream and downstream sides of the rupture disk 210 inside the venting device 200.

The heat-absorbing porous member 220 refers to a structure made of metal with a plurality of small holes, and in the present invention, the heat-absorbing porous member 220 performs filtering and flame extinguishing functions.

High temperature gases and particles are ejected from the venting device 200 when the rupture disk 210 breaks due to increased internal pressure caused by thermal runaway. The filtering function of the heat-absorbing porous member 220 acts on the high temperature particles, and the high temperature particles with a large diameter are filtered out by the heat-absorbing porous member 220. In particular, high-temperature particles exceeding a certain size act as an ignition source for external fires, so filtering by the heat-absorbing porous member 220 can effectively eliminate the cause of external ignition.

In addition, the heat-absorbing porous member 220 absorbs the heat generated by the combusting gas mixture and dissipates it to the surroundings, thereby reducing the combustion temperature so that the surrounding gas does not reach the spontaneous ignition temperature. This is because as the hot gas passes through the heat-absorbing porous member 220, it loses heat to the porous structure of the metal material. Thus, the flame generated by the thermal runaway of the secondary battery 10 loses an amount of heat that the flame can no longer sustain as it passes through the heat-absorbing porous member 220 in the venting device 200, and the thermal propagation phenomenon that spreads the thermal runaway to other secondary batteries in the vicinity and the external fire is suppressed.

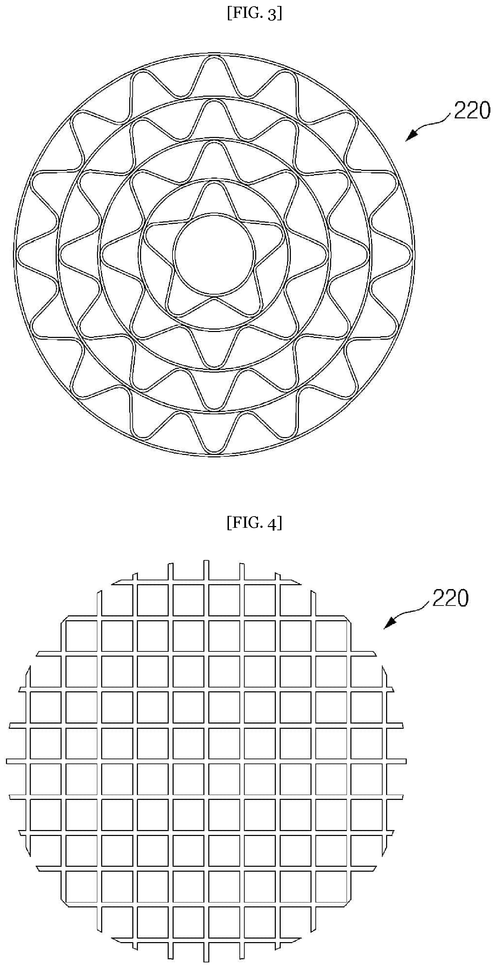

FIGS. 3 and 4 are drawings illustrating an example of a heat-absorbing porous member 220, respectively. The heat-absorbing porous member 220 of FIG. 3 is a member in which a corrugated metal ribbon is wound annularly to form a plurality of layers, with the corrugated metal ribbons forming a plurality of pores. In addition, the heat-absorbing porous member 220 of FIG. 4 is a member composed of a metal mesh net, that is, a metal mesh, wherein the mesh of the mesh net has a plurality of small holes. Here, it may be desirable for the metal mesh net to form a complex porous structure by stacking a plurality of thin mesh nets.

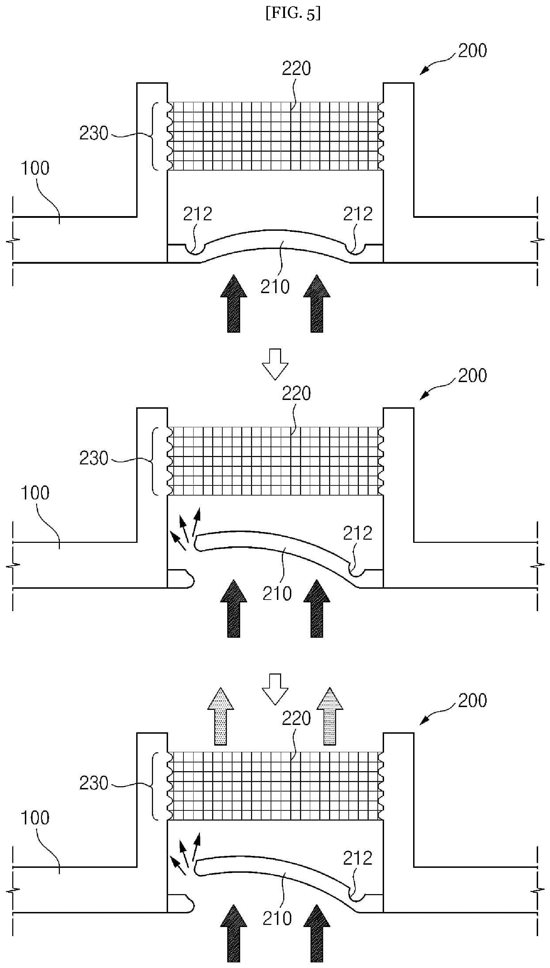

FIG. 5 is a drawing illustrating the operation of a venting device 200 including a heat-absorbing porous member 220. When the internal pressure of the secondary battery 10 increases, tensile strain occurs across the rupture disk 210 in response, tearing the weaker bursting part 212 to release the venting gas to the outside, thereby relieving the excessive internal pressure built up in the case 100.

Additionally, the heat-absorbing porous member 220 is disposed downstream of the ruptured rupture disk 210. Here, the heat-absorbing porous member 220 is located outside the bursting range of the bursting part 212 so as not to interfere with the operation of the rupture disk 210.

The plurality of holes formed by the heat-absorbing porous member 220 on the venting flow path exerts a filtering and flame extinguishing function. The filtering function of the heat-absorbing porous member 220 filters out large-sized high-temperature particles that act as ignition sources for external fires, and also exerts a flame extinguishing function that lowers the temperature below the combustion point by absorbing the heat generated by the gas mixture and dissipating it to the surroundings, thereby suppressing the eruption of flames.

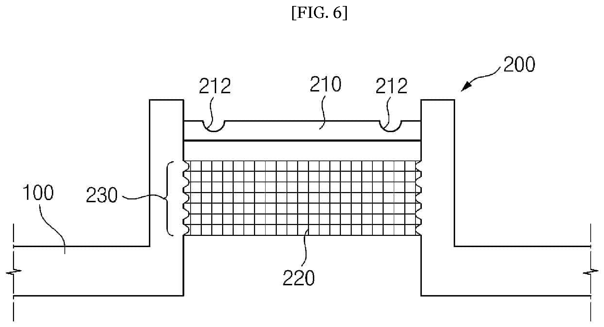

FIG. 6 is a drawing illustrating another exemplary embodiment of the venting device 200 of FIG. 2, wherein the venting device 200 of FIG. 2 has a heat-absorbing porous member 220 disposed downstream of the rupture disk 210, whereas the venting device 200 of FIG. 6 has a heat-absorbing porous member 220 disposed upstream of the rupture disk 210. Alternatively, although not shown, the heat-absorbing porous member 220 may be disposed upstream and downstream of the rupture disk 210, respectively. In other words, the location and number of heat-absorbing porous members 220 can be freely designed as long as it does not adversely affect the operation of the rupture disk 210.

Meanwhile, the heat-absorbing porous member 220 may be made of a heat-resistant stainless steel material that can withstand a high temperature flame. In one example, the heat-resistant stainless steel may be a ferritic stainless steel alloy such as X10CrAlSi7, X10CrAl13, X10CrAl18, and X18CrN28, or a austenitic stainless steel alloy such as X15CrNiSi20-12, X15CrNiSi25-20, X15CrNiSi25-21, and X12CrNiTi18-10, or a nickel-chromium stainless steel alloy such as NiCr15Fe, NiCr23Fe, NiCr22Mo9Nb, NiCr21Mo, and NiCr28FeSiCe.

However, due to the filtering function of the heat-absorbing porous member 220, if a large number of particles accumulate on the heat-absorbing porous member 220, the venting device 200 may be occluded and the external discharge of the venting gas may be hindered or blocked. If the venting device 200 becomes occluded and loses its function, the internal pressure of the secondary battery 10 may rise again, causing structural collapse of the secondary battery 10.

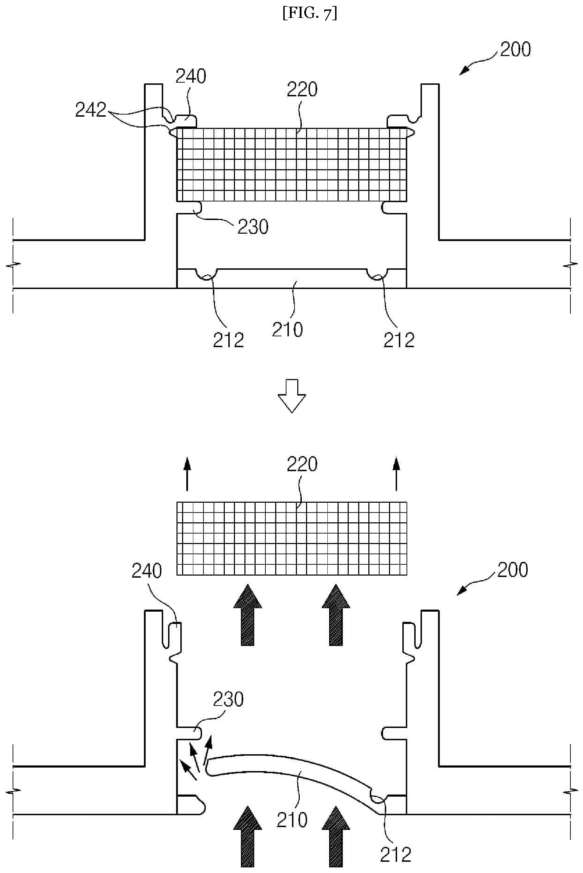

FIG. 7 illustrates an embodiment for preventing occlusion of the venting device 200 by the heat-absorbing porous member 220, wherein the venting device 200 of FIG. 7 prevents the worst-case scenario of the secondary battery 10 collapsing due to the heat-absorbing porous member 220 being displaced from the venting device 200 when excess pressure is applied.

In the embodiment of FIG. 7, the heat-absorbing porous member 220 is located downstream of the rupture disk 210 so that the heat-absorbing porous member 220 can be displaced from the venting device 200 without obstruction. In addition, the inner surface of the venting device 200 is provided with breakage projections 240 that break when a pressure of a second predetermined value exceeding a first predetermined value at which the rupture disk 210 bursts is applied for a predetermined period of time.

The breakage projection 240 located on the downstream side of the heat-absorbing porous member 220 maintains its shape during the application of a pressure below the second predetermined value, thereby supporting the heat-absorbing porous member 220 from being displaced and pushed out of the venting device 200 by the pressure of the gas.

However, when a pressure above the second predetermined value is applied to the heat-absorbing porous member 220, the breakage notch 242 formed at the root of the breakage projection 240 gradually deforms, and when the time at which the pressure above the second predetermined value is applied reaches a predetermined period of time, the breakage projection 240 is completely deformed or broken and loses its support for the heat-absorbing porous member 220. Accordingly, the heat-absorbing porous member 220 is displaced and pushed out of the venting device 200 by the pressure of the gas.

Here, a case in which the heat-absorbing porous member 220 is subjected to a pressure greater than the second predetermined value includes a case in which a large amount of particles accumulate in the heat-absorbing porous member 220, resulting in a significant decrease in breathability, resulting in an increase in the internal pressure, and also includes a case in which the thermal runaway phenomenon rapidly progresses, resulting in a significant increase in the internal pressure to reach the second predetermined value.

As such, when the internal pressure of the secondary battery 10 rises to reach the second predetermined value, it is necessary to give priority to preventing the rapid spread of flames due to the structural collapse of the secondary battery 10, rather than maintaining the filtering and flame extinguishing functions exerted by the heat-absorbing porous member 220. To this end, the embodiment of FIG. 7 is configured to accelerate the flow of the venting gas by removing the heat-absorbing porous member 220 from the venting device 200 when the pressure of the second predetermined value is applied for a predetermined period of time.

The condition under which the heat-absorbing porous member 220 is displaced from the venting device 200 is set by the design of the breakage projection 240, such as the strength of the breakage notch 242, and may preferably be set such that the heat-absorbing porous member 220 is displaced when an internal pressure of three atmospheres or more is maintained for more than one second.

### [Second Implementation Example]

The embodiment shown in FIG. 7 includes a configuration whereby the heat-absorbing porous member 220, which was acting as a flow obstruction, is displaced from the venting device 200 in response to an excessive increase in pressure within the secondary battery 10.

Meanwhile, the second embodiment of the present invention includes a configuration for removing the heat-absorbing porous member 220 from the venting device 200 in response to a temperature inside the secondary battery 10. In other words, from the perspective of removing the heat-absorbing porous member 220, it can be said that the first embodiment is pressure responsive and the second embodiment is temperature responsive.

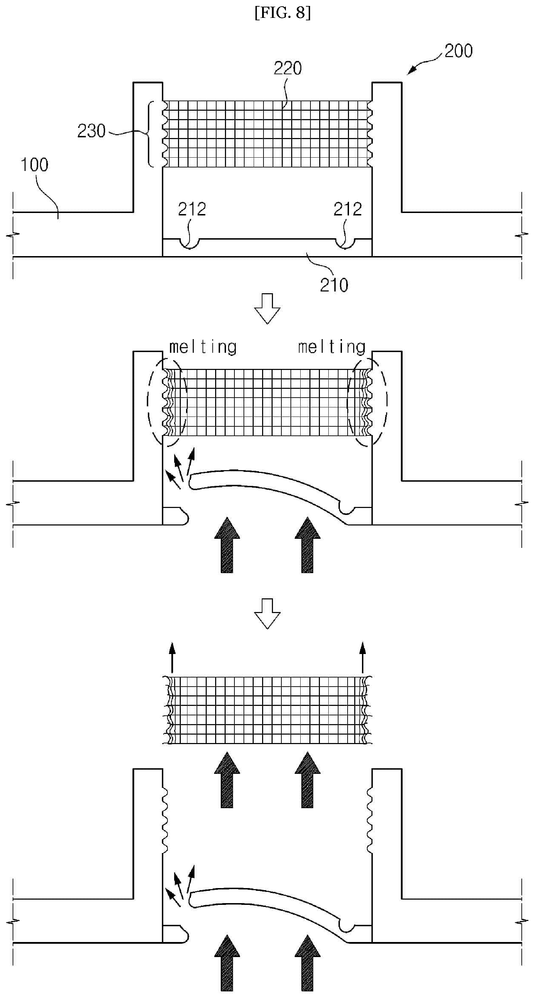

FIG. 8 is an illustration of a second embodiment in which the heat-absorbing porous member 220 is removed from the venting device 200 when an excess temperature is acted upon. As in the first embodiment, the heat-absorbing porous member 220 is located downstream of the rupture disk 210, but in the second embodiment, the heat-absorbing porous member 220 is held in place by a conventional support projection 230 that does not have a breakage structure like a breakage notch 242. Instead, the heat-absorbing porous member 220 is made of a different material.

In the second embodiment, the heat-absorbing porous member 220 is composed of a metallic material that is removed from the venting device 200 by melting at least a portion thereof when the temperature of the venting gas rises above a boundary temperature and acts for a predetermined period of time. In other words, the second embodiment is configured so that the heat-absorbing porous member 220 itself melts and deforms due to the abnormally high temperature of the venting gas, loses its support, and is thus pushed by the pressure of the venting gas and removed from the venting device 200.

In one preferred embodiment, the heat-absorbing porous member 220 may melt and be removed from the venting device 200 when the temperature of the venting gas rises above 500°C for at least 5 seconds. Correspondingly, the heat-absorbing porous member 220 of the second embodiment may be made of a single metal or an alloy having a melting point in the range of approximately 470 to 660°C.

The heat-absorbing porous member 220 may be preferably made of aluminum or an aluminum alloy material, considering all conditions such as having a melting point around 500°C, having a high thermal conductivity for a fast response to temperature, having a favorable processability for forming the porous structure, and the like.

For example, an aluminum material that meets these conditions may include at least one of 1060, 1100 aluminum.

In addition, the aluminum alloy material, which is not pure aluminum, may include at least one of the following aluminum alloys: 2011, 2014, 2017, 2024, 3003, 4032, 5052, 5056, 5083, 6061, 6N01, 6063, 7003, 7075, and 7N01.

Here, the first embodiment of the pressure-responsive type and the second embodiment of the temperature-responsive type can be practiced independently of each other, but it is also possible to combine them as compatible embodiments. In other words, by combining the configuration of the breakage projection 240 included in the first embodiment with the heat-absorbing porous member 220 having a specific melting point in the second embodiment, it is possible to configure it to respond to both pressure and temperature excessively rising due to thermal runaway, as will be self-evident to one of ordinary skill in the art from the disclosure herein.

The present invention has been described in more detail above with reference to the drawings and embodiments. However, it is to be understood that the configurations shown in the drawings or embodiments described herein are only one embodiment of the invention and do not represent all of the technical ideas of the invention, and that there may be various equivalents and modifications that may replace them at the time of filing the present application.

### [REFERENCE SIGNS]

10: SECONDARY BATTERY
100: CASE
110: ELECTRODE TERMINAL
200: VENTING DEVICE
210: RUPTURE DISK
212: BURSTING PART
220: HEAT-ABSORBING POROUS MEMBER
230: SUPPORT PROJECTION
240: BREAKAGE PROJECTION
242: BREAKAGE NOTCH

In view of the foregoing disclosure, the present invention may be implemented in accordance with the following itemized embodiment examples.

Item 1. A secondary battery comprising a venting device that opens when the pressure inside a case of the secondary battery exceeds a first predetermined value, wherein the venting device comprises:
a rupture disk having a bursting part formed therein that bursts at the first predetermined value, and
a heat-absorbing porous member provided on at least one of the upstream and downstream sides of the rupture disk.

Item 2. The secondary battery of item 1, wherein the heat-absorbing porous member is located outside a bursting range of the bursting part.

Item 3. The secondary battery of item 1, wherein the heat-absorbing porous member is a member in which a corrugated metal ribbon is wound annularly to form a plurality of layers.

Item 4. The secondary battery of item 1, wherein the heat-absorbing porous member is a member made up of a metal mesh net.

Item 5. The secondary battery of item 1, wherein the heat-absorbing porous member is located downstream of the rupture disk, and wherein the heat-absorbing porous member is displaced out of the venting device when a pressure of a second predetermined value exceeding the first predetermined value is applied for a predetermined period of time.

Item 6. The secondary battery of item 5, wherein the heat-absorbing porous member is displaced from the venting device when an internal pressure of 3 atmospheres or more is maintained for more than 1 second.

Item 7. The secondary battery of item 5, wherein a breakage projection is formed on an inner surface of the venting device on the downstream side of the heat-absorbing porous member, wherein the breakage projection breaks when a pressure of the second predetermined value is applied for a predetermined period of time.

Item 8. The secondary battery of item 5, wherein the heat-absorbing porous member is made of a heat-resistant stainless steel.

Item 9. The secondary battery of item 1, wherein the heat-absorbing porous member is located downstream of the rupture disk, and wherein the heat-absorbing porous member melts and is removed from the venting device when the temperature of the venting gas rises above the boundary temperature and is applied for a predetermined period of time.

Item 10. The secondary battery of item 9, wherein the heat-absorbing porous member melts and is removed from the venting device when the temperature of the venting gas rises above 500°C and is applied for more than 5 seconds.

Item 11. The secondary battery of item 10, wherein the heat-absorbing porous member is made of aluminum or aluminum alloy material.

Item 12. The secondary battery of item 11, wherein the aluminum material comprises at least one of 1060, 1100 aluminum.

Item 13 The secondary battery of item 11, wherein the aluminum alloy material comprises at least one of 2011, 2014, 2017, 2024, 3003, 4032, 5052, 5056, 5083, 6061, 6N01, 6063, 7003, 7075, and 7N01 aluminum alloys.

## Claims

1. A secondary battery (10) comprising a venting device (200) that opens when the pressure inside a case (100) of the secondary battery (10) exceeds a first predetermined value, wherein
the venting device (200) comprises:
a rupture disk (210) having a bursting part (212) formed therein that bursts at the first predetermined value,
a heat-absorbing porous member (220) is located downstream sides of the rupture disk (210), and
a breakage projection (240) formed on an inner surface of the venting device (200) on the downstream side of the heat-absorbing porous member (220).

2. The secondary battery (10) of claim 1, wherein
the heat-absorbing porous member (220) is located outside a bursting range of the bursting part (212).

3. The secondary battery (10) of claim 1, wherein
the heat-absorbing porous member (220) is a member in which a corrugated metal ribbon is wound annularly to form a plurality of layers.

4. The secondary battery (10) of claim 1, wherein
the heat-absorbing porous member (220) is a member made up of a metal mesh net.

5. The secondary battery (10) of claim 1, wherein
the heat-absorbing porous member (220) is displaced out of the venting device (200) when a pressure of a second predetermined value exceeding the first predetermined value is applied for a predetermined period of time.

6. The secondary battery (10) of claim 1, wherein
the heat-absorbing porous member (220) is displaced from the venting device (200) when an internal pressure of 3 atmospheres or more is maintained for more than 1 second.

7. The secondary battery (10) of claim 1, wherein
the breakage projection (240) breaks when a pressure of the second predetermined value is applied for a predetermined period of time.

8. The secondary battery (10) of claim 1, wherein
the heat-absorbing porous member (220) is made of a heat-resistant stainless steel.

9. The secondary battery (10) of claim 1, wherein
the heat-absorbing porous member (220) melts and is removed from the venting device (200) when the temperature of the venting gas rises above the boundary temperature and is applied for a predetermined period of time.

10. The secondary battery (10) of claim 9, wherein
the heat-absorbing porous member (220) melts and is removed from the venting device (200) when the temperature of the venting gas rises above 500°C and is applied for more than 5 seconds.

11. The secondary battery (10) of claim 10, wherein
the heat-absorbing porous member (220) is made of aluminum or aluminum alloy material.

12. The secondary battery (10) of claim 11, wherein
the aluminum material comprises at least one of 1060, 1100 aluminum.

13. The secondary battery (10) of claim 11, wherein
the aluminum alloy material comprises at least one of 2011, 2014, 2017, 2024, 3003, 4032, 5052, 5056, 5083, 6061, 6N01, 6063, 7003, 7075, and 7N01 aluminum alloys.
